# EUROPÄISCHE PATENTSCHRIFT

(11) **EP 1 867 035 B1**
(45) Veröffentlichungstag und Bekanntmachung des Hinweises auf die Patenterteilung: **01.05.2019**
(21) Anmeldenummer: 06725193.4
(22) Anmeldetag: 21.03.2006
(51) Int. Cl.: H02M 3/335

(54) **VERFAHREN ZUM BETREIBEN EINES SCHALTNETZTEILS MIT RÜCKSPEISUNG PRIMÄRSEITIGER STREUENERGIE**
METHOD FOR OPERATING A SWITCHED MODE POWER SUPPLY WITH THE RECOVERY OF PRIMARY SCATTERED ENERGY
PROCÈDE DE FONCTIONNEMENT D'UNE ALIMENTATION A DÉCOUPAGE AVEC RÉCUPÉRATION D'ÉNERGIE DE DIFFUSION COTE PRIMAIRE

(30) Priorität: 08.04.2005 DE 102005016285
(43) Veröffentlichungstag der Anmeldung: 19.12.2007
(73) Patentinhaber: Siemens Aktiengesellschaft, 80333 München (DE)
(72) Erfinder: APPEL, Wilhelm, A-2136 Laa a. d. Thaya (AT); SCHÖNLEITNER, Arnold, A-3002 Purkersdorf (AT); PEPRNY, Wolfgang, A-1210 Wien (AT)
(74) Vertreter: Maier, Daniel Oliver
(86) Internationale Anmeldenummer: PCT/EP2006/060906
(87) Internationale Veröffentlichungsnummer: WO 2006/106040

(56) Entgegenhaltungen:
- EP-A- 0 570 704
- US-A- 4 754 385
- US-A- 6 069 800

## Beschreibung

Die Erfindung betrifft ein Verfahren zum Betreiben eines Schaltnetzteiles als Sperrwandler, wobei in einer Einspeicherphase über eine, an einer Zwischenkreisspannung anliegende Primärwicklung magnetische Energie im Kern eines Transformators, welcher einen sogenannte Streuinduktivität aufweist, gespeichert wird, und wobei in einer darauf folgenden Ausspeicherphase die gespeicherte magnetische Energie großteils über eine Sekundärwicklung an eine Last abgegeben wird und eine durch die Streuinduktivität hervorgerufene Streuenergie primärseitig abgegeben wird.

Schaltnetzteile sind allgemein bekannt. Man kennt dabei solche, die nach dem Flusswandlerprinzip arbeiten und solche, die als Sperrwandler arbeiten. Bei letzteren wird während einer Einspeicherphase durch einen durch die Primärwicklung eines Transformators fließenden Strom magnetische Energie gespeichert. Diese wird während einer anschließenden Ausspeicherphase nach Gleichrichtung und Glättung an eine sekundärseitig angeschlossene Last abgegeben. Ein Schaltelement, das in Reihe mit der Primärwicklung des Transformators liegt, wird von einer Steuereinrichtung lastabhängig ein- und ausgeschaltet.

In der Regel wird ein Schaltnetzteil verwendet, um eine Gleichstromlast an ein Wechselstromnetz anzuschließen. Dabei wird das Schaltnetzteil eingangsseitig an das Wechselstromnetz angeschlossen und in einem ersten Schritt durch Gleichrichtung und Glättung eine Gleichspannung in einem Zwischenkreis bereitgestellt. Bei eingeschaltetem Schaltelement wird dann der Zwischenkreis über die Primärwicklung geschlossen und es fließt ein Strom, der einen magnetischen Fluss im Kern des Transformators hervorruft. Die in dieser Einspeicherphase zugeführte elektrische Energie wird als magnetische Energie im Kern des Transformators gespeichert. Zu beachten ist dabei die sogenannte Streuinduktivität des Transformators, die nicht für den Energietransfer genutzt werden kann. Sie stellt die nicht ideale Kopplung zwischen Primär- und Sekundärwicklung dar. Mit dem Beginn der Ausspeicherphase, d.h. wenn das Schaltelement abschaltet, bewirkt die primärseitige Streuenergie eine hohe Rückführungsspannung am Schaltelement, welche das Schaltelement zerstören kann. Kritisch ist dieses Verhalten vor allem bei leistungsstarken Schaltnetzteilen mit großen Transformatoren. Hier kann die primärseitige Streuenergie nicht mehr einfach thermisch in einem Snubber-Netzwerk abgebaut werden, sondern die Streuenergie muss, auch zur Steigerung des Wirkungsgrades, wieder zum primären Zwischenkreis rückgespeist werden.

Zur Begrenzung der Rückführspannung ist beispielsweise in der DE 35 37 536 A1 die Primärwicklung mit einer Anzapfung versehen, die etwa dem maximalen Tastverhältnis entspricht. Die Anzapfung ist mit einem Kondensator verbunden, der wiederum über eine Diode mit einem Bezugspotential verbunden ist. Damit wird jede Halbwelle des Schaltnetzteils an Null oder an ein Bezugspotential fest geklemmt, sodass keine hohen Rückführspannungen entstehen können.

Young R.: Stromversorgungen für SLICs. In: Telecomm & Elektronik, 2001, Heft 1, S. 27-32 beschreibt eine Lösung zur Vermeidung einer zu großen Rückführungsspannung durch Verwendung einer Snubberschaltung, die zwischen Primärwicklung und Schaltelement angeordnet ist. Dabei wird über einen Snubber-Widerstand und einen Snubber-Kondensator ein Teil der primärseitigen Streuenergie verbraucht, um so die maximale Rückführungsspannung zu begrenzen und das Schaltelement nicht zu beschädigen. Damit wird aber auch der Wirkungsgrad der Stromversorgung verschlechtert.

Auch die JP 11098832 A beschreibt einen Sperrwandler, der eine Snubberschaltung mit einem Kondensator, einer Diode und einer Hilfswicklung umfasst. Hier können die Verluste zwar gering gehalten werden, für leistungsstarke Schaltnetzteile sind sie jedoch nicht zu vernachlässigen.

Nach dem Stand der Technik wird deshalb für leistungsstarke Schaltnetzteile ein primärseitiger Entlastungskreis vorgesehen. Dieser Entlastungskreis bewirkt, dass die primärseitige Streuenergie über eine primärseitige Entlastungswicklung in den Zwischenkreis zurückgespeist werden kann, ohne dabei das Schaltelement zu überlasten. Im Entlastungskreis ist eine Diode angeordnet, die einen umgekehrten Stromfluss während der Einspeicherphase verhindert.

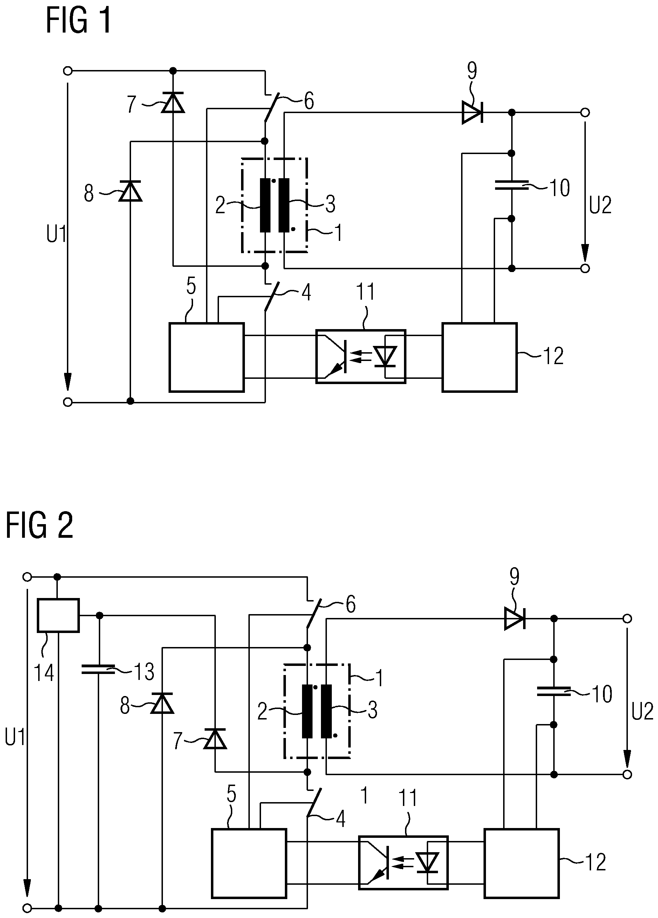

Dixon L.: Transformer and Inductor Design for Optimum Circuit Performance, Dallas, Texas 2003, Texas Instruments Incorporated, S. 2-3 beschreibt ein Verfahren, bei dem zur Rückführung der primärseitigen Streuenergie in den Zwischenkreis die Primärwicklung als Entlastungswicklung genutzt wird. Bei dieser Anordnung (siehe auch Fig. 1) liegt die Primärwicklung mit zwei zusätzlichen Anschlüssen an der Zwischenkreisspannung und dem Bezugspotenzial des Zwischenkreises an, wobei in diesen Anschlussverbindungen Dioden angeordnet sind, die nur einen Stromrückfluss während der Ausspeicherphase ermöglichen. Die Verbindung der Primärwicklung mit der Zwischenkreisspannung und dem Bezugspotenzial während der Einspeicherphase erfolgt über zwei Schaltelemente, die synchron von einer Steuerung ein- und ausgeschaltet werden.

Auch die US 4 754 385 beschreibt eine derartige Schaltung. Dabei sind zusätzlich in Reihe mit einer Diode ein Kondensator und parallel dazu ein Widerstand geschaltet. Der Kondensator puffert die rückfließende Energie während der Ausspeicherphase für den Fall, dass die Zwischenkreisspannung einen Rippel aufweist, wobei die Zwischenkreisspannung während der unteren Rippelspitzen unter die von der Sekundärseite auf die Primärseite übertragene Spannung absinkt.

In der JP 60148374 A ist ebenso ein Sperrwandler mit einer Primärwicklung beschrieben, welche zusätzlich über Dioden an der Zwischenkreisspannung und dem Bezugspotenzial anliegt. Hier ist in Reihe mit einer Diode ein Kondensator vorgesehen, in dem während kurzzeitiger Rückflussphasen Energie gepuffert wird.

Aus der Schrift EP 0 570 704 A2 ist ein Sperrwandler mit einem Übertrager und einem Schaltelement bekannt, wobei der Sperrwandler eine Spannungserzeugungseinheit zur Aufladung einer Energiespeichereinheit sowie eine Zuschalteinheit zum Anschalten der Energiespeichereinheit aufweist. Die Energiespeichereinheit ist dabei z.B. als Kondensator ausgeführt und wird für eine Weiterversorgung bei Unterschreitung einer minimalen Eingangsspannung angeschaltet.

Weiterhin ist aus der Schrift US 6,069,800 A ein einstufiger DC-DC-Wandler bekannt, mit welchem eine effektive Oberwellenoder Powerfaktorkorrektur durchgeführt werden kann - ohne zu Einschränkungen bei Frequenz, Leistung oder Spannung im Wandler zu führen. Dazu wird der isolierte Transformator des Wandlers mit einer primärseitigen Hilfswicklung ergänzt, welche entweder zyklisch weggeschaltet oder über einen Klemmschalter zum Aufladen eines Kondensators verwendet werden kann. Dabei wird der Kondensator üblicherweise über die Hilfswicklung geladen und abgeschaltet, wenn die Eingangsspannung unter die Spannung am Kondensator fällt.

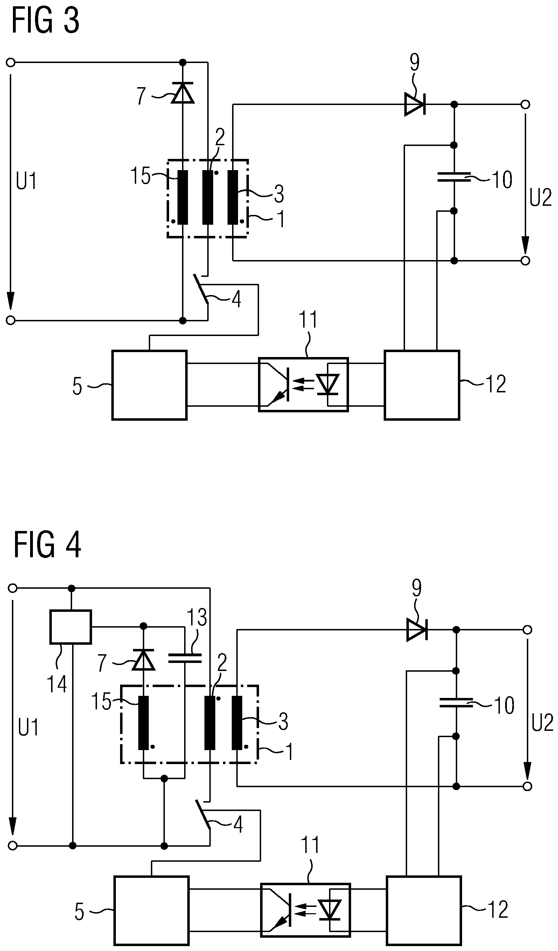

Ein weiteres bekanntes Verfahren zur Rückführung der primärseitigen Streuenergie in den Zwischenkreis nutzt eine zusätzliche primärseitige Hilfswicklung als Entlastungswicklung. Diese Hilfswicklung ist nahe der Primärwicklung gewickelt, wobei die Wickelrichtung für optimale Verkopplung gleich wie jene der Primärwicklung ist, die Beschaltung jedoch gegenläufig zur Primärwicklung ist (siehe auch Fig. 3). In der Ausspeicherphase wird dann die primärseitige Streuenergie über die Hilfswicklung und eine Diode in den Zwischenkreis zurückgespeist.

Bei Schaltnetzteilen kann es zu Betriebszuständen kommen, bei denen die Eingangsspannung und damit auch die Zwischenkreisspannung abfallen (z.B. bei kurzzeitigem Netzausfall). Dabei tritt das Problem auf, dass sekundärseitig nutzbare Energie in den Zwischenkreis zurückgespeist wird, wenn die Zwischenkreisspannung niedriger wird als die in der Entmagnetisierungswicklung entsprechend dem Windungsverhältnis transformierte Sekundärspannung. Bei geringeren Eingangsspannungen wird daher nach dem Stand der Technik unabhängig von den thermischen Gegebenheiten ein sogenanntes Leistungsderating angewandt. Dabei wird die entnehmbare Leistung für geringe Eingangsspannungen niedriger definiert.

Es ist auch bekannt, die Funktion eines Schaltnetzteils generell auf höhere minimale Eingangsspannungen zu begrenzen. Der Bereich mit geringen Eingangsspannungen wird also nicht vollständig genutzt, da dieser zu einer raschen Zerstörung des Entlastungskreises führen kann.

Der Erfindung liegt deshalb die Aufgabe zugrunde, für Verfahren zum Betreiben eines Schaltnetzteils der eingangs genannten Art eine Verbesserung gegenüber dem Stand der Technik anzugeben.

Erfindungsgemäß wird diese Aufgabe durch ein Verfahren gemäß Patentanspruch 1 gelöst. Vorteilhafte Ausführungsformen sind in den abhängigen Ansprüchen definiert. Die Entmagnetisierung erfolgt dabei nicht direkt in den Zwischenkreis, sondern in einen eigenen Entlastungskreis. Die primärseitig abgegebene Energie wird dabei genutzt, um in einem Entlastungskreis über eine Diode einen Kondensator aufzuladen und so die Spannung im Entlastungskreis über jener im Zwischenkreis zu halten; und zwar wird diese am Kondensator anliegende Entlastungskreisspannung oberhalb einer Referenzspannung gehalten, die sich aus der entsprechend dem Windungsverhältnis transformierten Sekundärspannung ergibt. Das hat den Vorteil, dass in der Ausspeicherphase nur die primärseitige Streuenergie über den Entlastungskreis abgeführt wird, auch wenn die Spannung im Zwischenkreis geringer als die transformierte Sekundärspannung bzw. die Referenzspannung ist. Damit wird es möglich, ein Schaltnetzteil auch bei geringen Zwischenkreisspannungen zu betreiben und ein mögliches Leistungsderating nur von den restlichen thermischen Gegebenheiten im Schaltnetzteil abhängig zu machen. Der nutzbare Eingangsspannungsbereich wird also größer. Darüber hinaus wird eine bessere Ausnutzung der in Zwischenkreiskondensatoren gespeicherten Energie erzielt, was zu einer deutlich gesteigerten Pufferzeit bei einem Netzausfall führt. Für eine gleiche Pufferzeit kann dementsprechend ein kleinerer und somit billigerer Elektrolytkondensator (Elko) im Zwischenkreis angeordnet werden, was zu einer Senkung der Herstellungskosten und Reduktion der Baugröße führt.

Ein weiterer Vorteil gegenüber dem Stand der Technik besteht darin, dass die Bauteile, über die die primärseitige Streuenergie zurückgespeist wird, bei niedrigen Eingangsspannungen keine zusätzliche Belastung durch Teile der sekundärseitig nutzbaren Energie erfahren. Die Bauteile können somit kleiner dimensionierte werden, was wiederum zur Reduktion der Kosten und der Baugröße führt.

Darüber hinaus steigt der Wirkungsgrad des Schaltnetzteils bei niedrigeren Eingangsspannungen und für die Dimensionierung der Windungsverhältnisse des Transformators ergeben sich durch die Erfindung größere Freiheitsgrade.

Vorteilhaft ist es des Weiteren, dass die Spannung des Kondensators in einem Regler mit einer definierten Maximalspannung verglichen wird, die knapp über der mit dem Windungsverhältnis transformierten Sekundärspannung liegt. Beim Erreichen der Maximalspannung am Entlastungskreis wird eine Verbindung zwischen Entlastungskreis und Zwischenkreis hergestellt und die primärseitig über den Entlastungskreis abgegebene Energie wird direkt dem Zwischenkreis zugeführt.
Somit wird sichergestellt, dass die Spannung im Entlastungskreis immer höher als die mit dem Windungsverhältnis transformierte Sekundärspannung ist. Dadurch lädt sich der Kondensator im Entlastungskreis nicht unnötig hoch auf.

In einer vorteilhaften Ausprägung der Erfindung lädt die primärseitig abgegebene Streuenergie über eine primärseitige Hilfswicklung und eine Diode den Kondensator auf. In der Ausspeicherphase wird die primärseitige Streuenergie also über eine zusätzliche, nahe der Primärwicklung gewickelte Hilfswicklung in den Entlastungskreis zurückgespeist. Die Hilfswicklung hat dabei beispielhaft dieselbe Windungsanzahl wie die Primärwicklung. Zum Zeitpunkt des Abschaltens des Schaltelements liegt an der Primärwicklung die Zwischenkreisspannung (z.B. 300V) an. Durch die Zurückspeisung der primärseitigen Streuenergie wird gleichzeitig in der Hilfswicklung eine Spannung induziert, die bei selber Windungszahl der Primär- und Hilfswicklungen der Zwischenkreisspannung entspricht (z.B. 300V). Am Schaltelement addieren sich dann diese Spannungen, wodurch diese Rückführungsspannung am Schaltelement maximal der doppelten Zwischenkreisspannung entspricht. Das Schaltelement braucht also darüber hinaus nicht für höhere Spannungen ausgelegt werden.

Eine andere vorteilhafte Ausprägung der Erfindung sieht vor, dass die primärseitig abgegebene Streuenergie über die Primärwicklung und eine Diode den Kondensator auflädt. Die entsprechende Anordnung umfasst dabei zwei synchron geschaltete Schaltelemente, wobei bei abgeschalteten Schaltelementen die Rückspeisung der primärseitigen Streuenergie über zusätzliche Zwischenkreis-Anschlüsse der Primärwicklung erfolgt. Diese Art der Rückspeisung ist vor allem für Schaltnetzteile mit hohen Zwischenkreisspannungen vorteilhaft, da zum Zeitpunkt des Abschaltens die Spannung an den Schaltelementen nur der einfachen Zwischenkreisspannung entspricht. Es können also zwei Schaltelemente verwendet werden, die nur für eine maximale Zwischenkreisspannung ausgelegt sind. Diese beiden Schaltelemente sind in der Regel bei hohen Spannungen billiger als ein Schaltelement, dass für die doppelte Zwischenkreisspannung ausgelegt werden müsste.

Naturgemäß wird im Regler ein Teil der im Entlastungskreis zwischengespeicherten Energie in Wärme umgesetzt. Diese Verlustwärme ist jedoch wesentlich geringer als die bei den bekannten Verfahren auftretende Verlustwärme. Durch den Einsatz eines gekühlten Reglers ergibt sich der Vorteil, dass auch bei leistungsstärkeren Schaltnetzteilen dauerhaft mit kleineren Eingangsspannungen gearbeitet werden kann.

Eine vorteilhafte Anordnung zur Durchführung der Verfahren sieht vor, dass ein Kondensator in der Weise angeordnet ist, dass er durch die primärseitig abgegebene Energie so aufgeladen wird, dass die an ihm anliegende Spannung immer über der sekundärseitig anliegenden Spannung mal dem Übertragungsverhältnis des Transformators liegt.

Für die Rückspeisung der primärseitigen Streuenergie über die Primärwicklung weist die Primärwicklung einen ersten Wicklungsanschluss auf, der über ein Schaltelement an die Zwischenkreisspannung angeschlossen ist und über eine Diode mit einem Bezugspotenzial verbunden ist. Die Primärwicklung weist einen zweiten Wicklungsanschluss auf, der über ein weiteres Schaltelement an das Bezugspotenzial angeschlossen ist und über eine weitere Diode mit der Zwischenkreisspannung verbunden ist. Die primärseitig abgegebene Energie lädt dann über eine der Dioden den Kondensator auf.

Eine andere vorteilhafte Anordnung sieht vor, dass eine primärseitige Hilfswicklung in der Weise angeordnet ist, dass über diese die primärseitig abgegebene Energie über eine Diode den Kondensator auflädt. Im geschlossenen Entlastungskreis sind dabei die Hilfswicklung, die Diode und der Kondensator in Reihe geschaltet. Zwischen Diode und Kondensator und zwischen Kondensator und Hilfswicklung befinden sich die Anschlüsse, mit denen der Entlastungskreis über den Regler mit dem Zwischenkreis verbunden ist.

Zur Begrenzung der Spannung im Entlastungskreis ist es vorteilhaft, wenn primärseitig ein Regler vorgesehen ist, über den ein Anschluss des Kondensators mit dem Zwischenkreis verbunden ist. Der Regler kann dabei als Längsregler, aber auch als Schaltregler ausgeführt sein und kann auf einfache Weise so dimensioniert werden, dass zu jeder Zeit im Entlastungskreis eine gewünschte minimale Gegenspannung erzielt wird.

Die Erfindung wird nachfolgend in beispielhafter Weise unter Bezugnahme auf die beigefügten Figuren erläutert. Es zeigen in schematischer Darstellung:
- Fig. 1:: ein Schaltnetzteil mit Rückspeisung der Streuenergie über die Primärwicklung nach dem Stand der Technik
- Fig. 2:: ein erfindungsgemäßes Schaltnetzteil mit Rückspeisung der Streuenergie über die Primärwicklung
- Fig. 3:: ein Schaltnetzteil mit einer Entlastungs- bzw. Hilfswicklung nach dem Stand der Technik
- Fig. 4:: ein erfindungsgemäßes Schaltnetzteil mit einer Entlastungs- bzw. Hilfswicklung und spannungsseitig angeschlossenem Regler
- Fig. 5:: ein erfindungsgemäßes Schaltnetzteil mit einer Hilfswicklung und masseseitig angeschlossenem Regler
- Fig. 6:: einen Regler mit Transistor und Diode
- Fig. 7:: einen Regler mit FET

In Figur 1 ist ein Schaltnetzteil als Sperrwandler vereinfacht dargestellt. Der Transformator 1 weist dabei eine Primärwicklung 2 und eine Sekundärwicklung 3 auf, die gegengleich gewickelt sind. Sekundärseitig steht nach Gleichrichtung mittels einer Gleichrichterdiode 9 und eines Glättungskondensator 10 die Ausgangsspannung U2 zur Verfügung. An dieser Ausgangsspannung U2 liegt ein Ausgangsspannungsregler 12 an, der ein Stellsignal über einen Optokoppler 11 an eine Steuerung 5 zum lastabhängigen Ein- und Ausschalten der beiden Schaltelemente 4 und 6 überträgt. Diese Steuerung 5 arbeitet dabei in der Regel mit der Pulsweitenmodulation (PWM), bei der die über den Transformator 1 übertragene Leistung durch die Länge der Einschaltzeiten bei normalerweise gleich bleibender Taktfrequenz bestimmt wird. Die Taktfrequenz ist dabei wesentlich höher als die Netzfrequenz.

Die Wicklungsanschlüsse der Primärwicklung 2 sind parallel zu den Schaltelementen 4 und 6 über Dioden 7 und 8 mit Anschlüssen der Zwischenkreisspannung U1 bzw. dem Bezugspotenzial des Zwischenkreises verbunden. Die Dioden 7 und 8 bestimmen dabei den Stromfluss im Zwischenkreis in der Weise, dass bei eingeschalteten Schaltungselementen 4 und 6 ein durch die Zwischenkreisspannung U1 hervorgerufener Strom durch die Primärwicklung 2 fließt und dass bei abgeschalteten Schaltelementen 4 und 6 ein durch die primärseitige Streuenergie hervorgerufener Strom über die Dioden in den Zwischenkreis zurückfließt. Sinkt nun die Zwischenkreisspannung U2 unter die mit dem Übertragungsverhältnis des Transformators 1 transformierte Sekundärspannung ab, wird bei abgeschalteten Schaltelementen 4 und 6 während der Ausspeicherphase zusätzlich zur primärseitigen Streuenergie fehlerhafterweise auch ein Teil der sekundärseitig nutzbaren Energie in den Zwischenkreis zurückgespeist.

Diese fehlerhafte Rückspeisung wird durch die in Figur 2 dargestellte Ausprägung der Erfindung verhindert. Die Anordnung entspricht dabei der in Figur 1 dargestellten bis auf einen Rückspeisungszweig, mit dem ein Wicklungsanschluss der Primärwicklung 2 über eine Diode 7 mit einem Regler 14 verbunden ist. Dabei ist die Anode der Diode 7 mit dem Wicklungsanschluss und die Kathode der Diode 7 mit dem Regler 14 und zusätzlich mit einem ersten Anschluss eines Kondensators 13 verbunden. Der zweite Anschluss des Kondensators 13 ist mit dem Bezugspotenzial des Zwischenkreises verbunden. Mit jedem Taktzyklus des Schaltnetzteils lädt während der Ausspeicherphase bei abgeschalteten Schaltelementen 4 und 6 die primärseitige Streuenergie aus dem Transformator 1 über die Diode 7 den Kondensator 13 auf. Die Spannung am Kondensator 13 steigt somit an. Sobald die Spannung am Kondensator 13 größer als eine vorgegebene Referenzspannung wird, schaltet der Regler 14 durch und entlädt den Kondensator 13 so lange zum Zwischenkreis hin, bis die Spannung am Kondensator 13 wieder kleiner ist als die Referenzspannung.

Diese Referenzspannung ist dabei als minimale Gegenspannung im Entlastungskreis definierbar, wobei diese in einfacher Weise durch eine Z-Diode mit entsprechender Durchbruchspannung vorgegeben werden kann.

In Figur 3 ist ein Schaltnetzteil mit einer Hilfswicklung zur Rückspeisung der primärseitigen Streuenergie nach dem Stand der Technik angegeben. Die Sekundärseite entspricht dabei den Darstellungen in den Figuren 1 und 2. Primärseitig ist jedoch nur ein Schaltelement 4 mit der Primärwicklung 2 in Reihe angeordnet. Dieses Schaltelement 4 wird wieder über eine Steuerung 5 ein- und ausgeschaltet.

Nahe an der Primärwicklung 2 ist im Transformator 1 eine Hilfswicklung 15 angeordnet, und zwar analog zur Sekundärwicklung 3 als Sperrwandler-Wicklung eingesetzt. Die Windungsanzahl der Primärwicklung 2 und der Hilfswicklung 15 ist dabei typischerweise gleich, kann aber auch unterschiedlich gewählt werden. Die Hilfswicklung 15 ist mit einem Wicklungsanschluss über eine Diode 7 mit der Zwischenkreisspannung und mit dem zweiten Wicklungsanschluss mit dem Bezugspotenzial des Zwischenkreises verbunden. Die Diode 7 verhindert während der Einspeicherphase einen Stromfluss durch die Hilfswicklung 15, erst nach dem Abschalten des Schaltelements 4 dreht durch die Rückspeisung der primärseitigen Streuenergie die Spannungsrichtung um, so dass Strom über die Diode 7 in den Zwischenkreis fließen kann. Fällt die Zwischenkreisspannung U1 unterhalb die mit dem Übersetzungsverhältnis des Transformators 1 transformierten Sekundärspannung, ergibt sich wieder das Problem, dass zur primärseitigen Streuenergie fehlerhafterweise auch ein Teil der sekundärseitig nutzbaren Energie in den Zwischenkreis zurückgespeist wird.

In Figur 4 ist eine erfindungsgemäße Lösung dargestellt, die die fehlerhafte Rückspeisung für Schaltnetzteile mit Hilfswicklung 15 verhindert. Bis auf den Anschluss der Hilfswicklung 15 an die Zwischenkreisspannung U1 entspricht die Anordnung der in Figur 3 dargestellten. Die Hilfswicklung 15 ist wieder nahe der Primärwicklung 2 gegengleich zu dieser mit derselben Wicklungsanzahl angeordnet. Mit einem Anschluss ist die Hilfswicklung 15 mit dem Bezugspotenzial des Zwischenkreises verbunden, der zweite Anschluss der Hilfswicklung 15 ist über eine Diode 7 mit einem Regler 14 verbunden. Parallel zur Serienschaltung aus Hilfswicklung 15 und Diode 7 ist ein Kondensator 13 angeordnet. Die Funktionsweise entspricht dabei wieder der zu Figur 2 beschriebenen, nur dass hier mit jedem Taktzyklus die primärseitige Streuenergie über die Hilfswicklung 15 in den Entlastungskreis, bestehend aus Hilfswicklung 15, Diode 7 und Kondensator 13, gespeist wird.

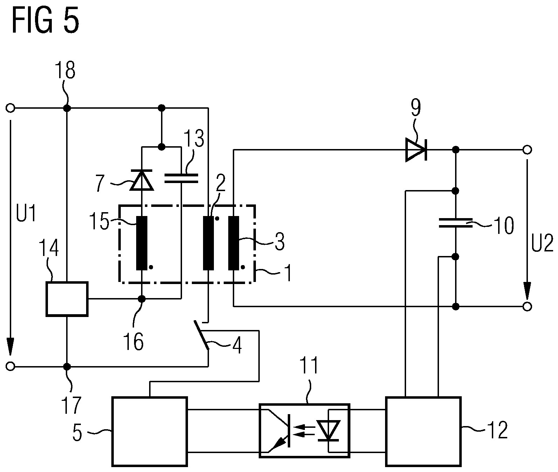

Die in Figur 5 dargestellte Anordnung entspricht im Wesentlichen der in Figur 4 dargestellten mit dem Unterschied, dass hier der Regler 14 den Zwischenkreis und den Entlastungskreis nicht spannungsseitig, sondern massenseitig verbindet. Als Referenzspannung im Regler (z.B. als Z-Diodenspannung) ist dann wiederum die minimal zu erhaltende Gegenspannung im Entlastungskreis vorgegeben.

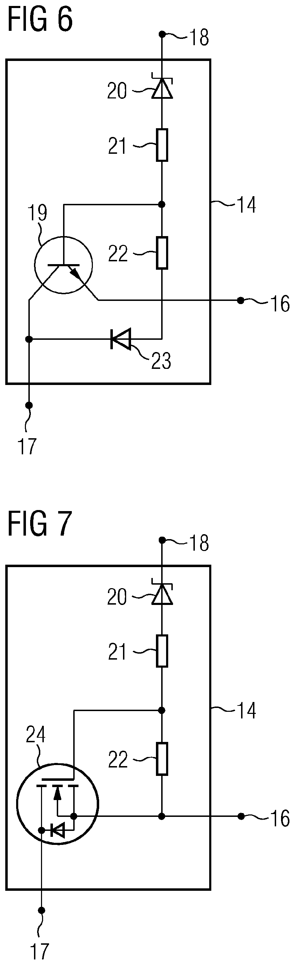

Figur 6 zeigt eine Ausprägung des Reglers 14 gemäß der in Figur 5 dargestellt Anordnung innerhalb der Schaltung mit den drei Anschlüssen 16, 17 und 18. Mit dem ersten Anschluss 18 liegt der Regler an der Zwischenkreisspannung U1 an, wobei ausgehend von diesem Anschluss 18 eine Z-Diode 20, zwei Widerstände 21 und 22 und ein Diode 23 in Reihe bis zum Anschluss 17 angeordnet sind, mit dem der Regler 14 mit dem Bezugspotenzial des Zwischenkreises verbunden ist. Zwischen dem zweiten Widerstand 22 und der Diode 23 zweigt ein Anschluss 16 ab, mit dem der Regler 14 mit dem Bezugspotenzial des Entlastungskreises verbunden ist. Im Regler 14 ist des Weiteren ein Transistor 19 vorgesehen, dessen Basis mit einer Abzweigung zwischen den Widerständen 21 und 22 verbunden ist. Der Emitter des Transistors 19 liegt am Bezugspotenzial des Entlastungskreises an und der Kollektor ist mit dem Bezugspotenzial des Zwischenkreises verbunden.

Die eigentlichen Reglerfunktionen werden durch die Z-Diode 20 als Referenzelement und durch den Transistor 19 zum Durchschalten des Kondensators 13 in den Zwischenkreis erfüllt. Die Widerstände 21 und 22 dienen als Schutzelemente sowie zur Abstimmung des Transistors 19 und zur Verbesserung des Reglerverhaltens. Die Diode 23 ist für den Standardfall vorgesehen, dass die Zwischenkreisspannung U1 höher als die Entlastungsspannung ist. Dann lädt ein durch die Zwischenkreisspannung U1 hervorgerufener Strom durch die Diode 23 den Kondensator 13 auf. Das Verhalten ist in diesem Fall genau so wie bei direkter Rückspeisung der primärseitigen Streuenergie in den Zwischenkreis.

Der Regler 14 ist auch in Figur 7 dargestellt, wobei hier der Transistor 19 und die Diode 23 durch einen Feldeffekttransistor (FET) 24 ersetzt sind. Die Wirkungsweise entspricht dabei dem in Figur 6 dargestellten Regler 14, da die Diode 23 bereits technologisch bedingt im FET eingebaut ist.

## Patentansprüche

1. Verfahren zum Betreiben eines Schaltnetzteiles als Sperrwandler, einen Zwischenkreis und einen Transformator (1) umfassend, wobei in einer Einspeicherphase über eine, an einer Zwischenkreisspannung (U1) anliegende Primärwicklung (2) magnetische Energie im Kern des Transformators (1), welcher eine sogenannte Streuinduktivität aufweist, gespeichert wird, und wobei in einer darauf folgenden Ausspeicherphase die gespeicherte magnetische Energie großteils über eine Sekundärwicklung (3) an eine Last abgegeben wird und eine durch die Streuinduktivität des Transformators hervorgerufene Streuenergie primärseitig abgegeben wird, **dadurch gekennzeichnet, dass** in einem Regler (14), welcher einen Kondensator (13) an den Zwischenkreis schaltet, eine Spannung des Kondensators (13) mit einer definierten Maximalspannung verglichen wird, welche knapp über der mit dem Windungsverhältnis des Transformators (1) transformierten sekundärseitig anliegenden Spannung liegt, wobei beim Erreichen der Maximalspannung durch die Spannung am Kondensator (13) eine Verbindung zwischen dem Kondensator (13) und dem Zwischenkreis hergestellt und die primärseitig über den Kondensator (13) abgegebene Energie direkt dem Zwischenkreis zugeführt wird, wobei der Kondensator (13) durch die primärseitig abgegebene Energie so aufgeladen wird, dass die am Kondensator (13) anliegende Spannung immer über der mit dem Windungsverhältnis des Transformators (1) transformierten sekundärseitig anliegenden Spannung liegt.

2. Verfahren nach Anspruch 1, **dadurch gekennzeichnet, dass** die primärseitig abgegebene Streuenergie über eine primärseitige Hilfswicklung (15) und eine Diode (7) den Kondensator (13) auflädt.

3. Verfahren nach Anspruch 1, **dadurch gekennzeichnet, dass** die primärseitig abgegebene Streuenergie über die Primärwicklung (2) und eine Diode (7) den Kondensator (13) auflädt.

## Claims

1. Method for operating a switched mode power supply as a flyback converter, comprising an intermediate circuit and a transformer (1), wherein, in a capture phase, magnetic energy is stored in the core of the transformer (1), which has what is known as leakage inductance, via a primary winding (2) that is attached to an intermediate circuit voltage (U1) and wherein, in a subsequent release phase, most of the stored magnetic energy is delivered to a load via a secondary winding (3) and a leakage energy caused by the leakage inductance of the transformer is delivered on the primary side, **characterised in that** in a regulator (14) which connects a capacitor (13) to the intermediate circuit, a voltage of the capacitor (13) is compared with a defined maximum voltage which is just above the voltage present on the secondary side and transformed with the turns ratio of the transformer (1), wherein when the maximum voltage is reached by the voltage on the capacitor (13), a connection is established between the capacitor (13) and the intermediate circuit and the energy which is delivered on the primary side via the capacitor (13) is fed directly to the intermediate circuit, wherein the capacitor (13) is charged by the energy delivered on the primary side such that the voltage present on the capacitor (13) is always higher than the voltage present on the secondary side and transformed with the turns ratio of the transformer (1).

2. Method according to claim 1, **characterised in that** the leakage energy which is delivered on the primary side charges the capacitor (13) via a primary-side auxiliary winding (15) and a diode (7).

3. Method according to claim 1, **characterised in that** the leakage energy which is delivered on the primary side charges the capacitor (13) via the primary winding (2) and a diode (7) .

## Revendications

1. Procédé de fonctionnement d'une partie de réseau de distribution en tant que convertisseur à oscillateur bloqué, comprenant un circuit intermédiaire et un transformateur (1), dans lequel dans une phase de stockage, de l'énergie magnétique au coeur du transformateur (1), lequel présente une dite inductance de fuite, est stockée par le biais d'un bobinage primaire (2) à une tension (U1) de circuit intermédiaire, et dans lequel dans une phase de retrait, l'énergie magnétique stockée est fournie en grande partie à une charge par le biais d'un bobinage secondaire (3) et une énergie de diffusion déclenchée par l'inductance de fuite du transformateur est fournie côté primaire, **caractérisé en ce que** dans un régulateur (14) qui couple un condensateur (13) au circuit intermédiaire, une tension du condensateur (13) est comparée à une tension maximale transformée, laquelle est légèrement au-dessus de la tension côté secondaire transformée avec le rapport de bobinage du transformateur (1), dans lequel lorsque la tension maximale est atteinte, une liaison entre le condensateur (13) et le circuit intermédiaire est établie par la tension sur le condensateur (13), et l'énergie fournie côté primaire par le biais du condensateur (13) est dirigée directement vers le circuit intermédiaire, dans lequel le condensateur (13) est ainsi chargé par l'énergie fournie côté primaire que la tension au condensateur (13) est toujours au-dessus de la tension côté secondaire transformée avec le rapport de bobinage du transformateur (1).

2. Procédé selon la revendication 1, **caractérisé en ce que** l'énergie de diffusion fournie côté primaire charge le condensateur (13) par le biais d'un bobinage auxiliaire (15) côté primaire et d'une diode (7).

3. Procédé selon la revendication 1, **caractérisé en ce que** l'énergie de diffusion fournie côté primaire charge le condensateur (13) par le biais du bobinage primaire (2) et d'une diode (7).
